(19) Europäisches Patentamt
European Patent Office
Office européen des brevets

(11) **EP 2 738 524 B1**

(12) **EUROPÄISCHE PATENTSCHRIFT**

(45) Veröffentlichungstag und Bekanntmachung des Hinweises auf die Patenterteilung:
**26.07.2017   Patentblatt 2017/30**

(51) Int Cl.:
*G01D 5/38* *(2006.01)*   *G01D 5/347* *(2006.01)*

(21) Anmeldenummer: **13193458.0**

(22) Anmeldetag: **19.11.2013**

(54) **Positionsmesseinrichtung**

Position measuring device

Dispositif de mesure de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2012   DE 102012222077**

(43) Veröffentlichungstag der Anmeldung:
**04.06.2014   Patentblatt 2014/23**

(73) Patentinhaber: **Dr. Johannes Heidenhain GmbH 83301 Traunreut (DE)**

(72) Erfinder:
• **Holzapfel, Wolfgang 83119 Obing (DE)**
• **Hermann, Michael 83342 Tacherting (DE)**
• **Sändig, Karsten 83349 Palling (DE)**

(56) Entgegenhaltungen:
**EP-A1- 1 795 872        EP-A2- 1 760 435
EP-A2- 2 570 780        WO-A1-2007/129022
US-A1- 2007 187 581**

EP 2 738 524 B1

**Beschreibung**

Die vorliegende Erfindung betrifft eine Positionsmesseinrichtung mit einem zylinderförmigen Objekt mit einer ringartig umlaufenden Reflexions-Messteilung, das um die Objekt-Längsachse drehbar angeordnet ist, und mit einer gegenüber dem drehbar angeordneten Objekt stationären Abtasteinheit zum optischen Abtasten der Reflexions-Messteilung.

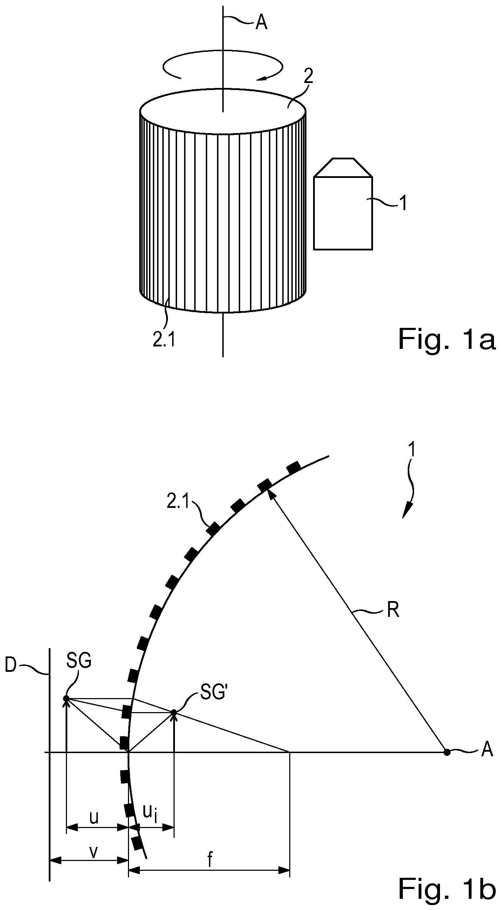

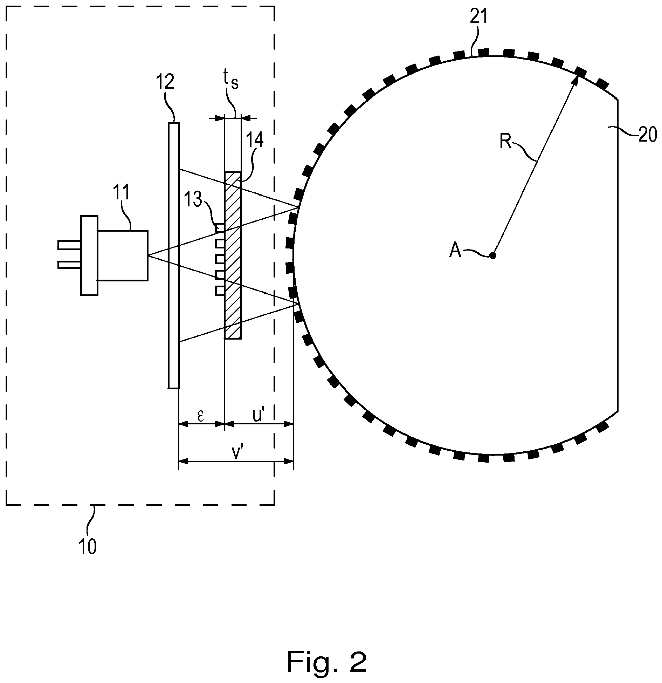

Eine gattungsgemäße Positionsmesseinrichtung ist z.B. aus der Beschreibungseinleitung der EP 1 795 872 A1 bekannt. Figur 1 dieser Druckschrift zeigt eine Positionsmesseinrichtung, die zum einen ein zylinderförmiges Objekt mit einer ringartig umlaufenden Reflexions-Messteilung aufweist, wobei das Objekt um die Objekt-Längsachse drehbar angeordnet ist. Zum anderen ist eine gegenüber dem drehbar angeordneten Objekt stationäre Abtasteinheit zum optischen Abtasten der Reflexions-Messteilung vorgesehen. Geeignete Abtasteinheiten für eine solche Vorrichtung sind etwa in den Figuren 2B und 2C dargestellt und umfassen jeweils eine Lichtquelle, ein Sendegitter und einen Detektor. Die von der Lichtquelle emittierten Strahlenbündel durchlaufen das Sendegitter und beaufschlagen dann die Reflexions-Messteilung. Dort erfolgt eine Rückreflexion in Richtung des Detektors, über den im Fall einer Relativbewegung von Reflexions-Messteilung und Abtasteinheit rotationsabhängige Positionssignale erzeugbar sind.

Das in einer derartigen Positionsmesseinrichtung genutzte optische Abtastprinzip ist im Detail beschrieben in der Veröffentlichung von R.M. Pettigrew mit dem Titel "Analysis of Grating Images and its Application to Displacement Metrology" in SPIE Vol. 136, 1st European Congress on Optics Applied to Metrology (1977), S. 325 - 332. Nachfolgend sei dieses bekannte Abtastprinzip kurz erläutert.

Hierbei wird ein Sendegitter durch eine geeignete Lichtquelle, z.B. eine LED, beleuchtet. Jeder beleuchtete Sendegitterstrich sendet jeweils eine Zylinderwelle auf die Maßverkörperung, die sich im Abstand u hinter dem Sendegitter befindet. Im Strahlengang entstehen in Abständen v vergrößerte Selbstabbilder der Maßverkörperung durch jede dieser Zylinderwellen. Die Periodizität $d_D$ der Selbstabbilder ergibt sich in einer Detektionsebene folgendermaßen:

$$d_D = d_M \left( 1 + \frac{v}{u} \right) \qquad \text{(Gl. 1)}$$

$d_D :=$     Periodizität der Selbstabbilder der Maßverkörperung in einer Detektionsebene am Detektor
$d_M :=$     Periodizität der Maßverkörperung
$u :=$     Abstand zwischen Sendegitter und Maßverkörperung
$v :=$     Abstand zwischen Maßverkörperung und Detektionsebene

Durch die geeignete Wahl der Periodizität $d_S$ des Sendegitters gemäß nachfolgender Gleichung 2 wird erreicht, dass sich die Selbstabbilder am Detektor konstruktiv inkohärent aufaddieren.

$$d_S = d_M \left( 1 + \frac{u}{v} \right) \qquad \text{(Gl. 2)}$$

$d_S :=$     Periodizität des Sendegitters
$d_M :=$     Periodizität der Maßverkörperung
$u :=$     Abstand zwischen Sendegitter und Maßverkörperung
$v :=$     Abstand zwischen Maßverkörperung und Detektionsebene

Im Fall einer Bewegung der Maßverkörperung gegenüber den anderen Komponenten bewegt sich auch das Selbstabbild der Maßverkörperung in der Detektionsebene. Wird der Detektor als sog. strukturierter Fotodetektor ausgebildet, dessen Periodizität der des Maßverkörperungs-Selbstabbilds entspricht, so können darüber verschiebungsabhängige Positionssignale in Form von phasenverschobenen Inkrementalsignalen erzeugt werden. Für den optimalen Kontrast der Selbstabbilder der Maßverkörperung erweist sich ferner als günstig, wenn noch zusätzlich die nachfolgende Bedingung eingehalten wird, die auch als sog. Talbot-Bedingung bekannt ist:

$$\frac{\lambda}{n d_M^2} = \frac{1}{u} + \frac{1}{v} \qquad \text{(Gl. 3)}$$

$d_M :=$     Periodizität der Maßverkörperung
$u :=$     Abstand zwischen Sendegitter und Maßverkörperung
$v :=$     Abstand zwischen Maßverkörperung und Detektionsebene

$$n := 1,2,3, \ldots\ldots$$

Besonders vorteilhaft lässt sich dieses Abtastprinzip in Auflichtsystemen einsetzen, in denen die Maßverkörperung als Reflexions-Messteilung ausgebildet ist und bei denen das Sendegitter und der Detektor in einer gemeinsamen Ebene angeordnet sind. In diesem Fall gilt:

$$u = v \quad \text{(Gl. 4)}$$

$u :=$  Abstand zwischen Sendegitter und Maßverkörperung
$v :=$  Abstand zwischen Maßverkörperung und Detektionsebene

Aus Gleichung 1 folgt, dass bei einer Änderung des Abtastabstandes, also bei einem Auflichtsystem der Abstand u bzw. v, die Periodizität $d_D$ der Selbstabbilder der Maßverkörperung sich nicht ändert und es zu keinen Modulationsgradeinbrüchen in den Positionssignalen infolgedessen kommt.

Diese Überlegungen gelten grundsätzlich nur für ebene Maßverkörperungen. Soll das erläuterte Abtastprinzip in Positionsmesseinrichtungen mit gekrümmten Maßverkörperungen wie z.B. ringartig umlaufenden Reflexions-Messteilungen, eingesetzt werden, so ist nicht a priori gewährleistet, dass sich die Periodizität $d_D$ der Selbstabbilder der Maßverkörperung, d.h. die Periodizität des Streifenmusters in der Detektionsebene, bei einer Änderung des Abtastabstandes nicht verändert. In der eingangs erwähnten EP 1 795 872 A1 finden sich keine Hinweise, wie eine solche Unabhängigkeit der Streifenmusterperiode in der Detektionsebene vom Abtastabstand bei derartigen Positionsmesseinrichtungen gewährleistet werden kann.

Aus der US 2007/187581 A1 ist eine optische Positionsmesseinrichtung bekannt, bei der zwischen Lichtquelle und Detektor drei Gitter durchlaufen werden; das erste und dritte Gitter sind hierbei als Amplitudengitter ausgebildet, das zweite Gitter als Phasengitter. Vorgeschlagen werden neben Anordnungen zur Erfassung von linearen Bewegungen auch rotatorische Messanordnungen.

Die WO 2007/129022 A1 offenbart eine rotatorische optische Positionsmesseinrichtung, bei der eine radiale Maßverkörperung abgetastet wird. Auf Seiten der Abtasteinheit wird über die Anordnung eines lichtemittierenden und eines strahlungsempfindlichen Bereiches eine Ebene ausgebildet, die verkippt gegenüber der Maßverkörperungsebene angeordnet ist.

In der EP 2 570 780 A2 ist beschrieben, wie in einer rotatorischen optischen Positionsmesseinrichtung durch die Ausbildung der Teilscheibe mit darin integrierten optischen Mitteln sichergestellt werden kann, dass die Lichtquelle in eine Position abgebildet wird, die bestimmten Abstandsbedingungen genügt.

Aus der EP 1760 435 A2 ist schließlich eine interferentielle optische Positionsmesseinrichtung mit einer reflektiven, trommelförmig ausgebildeten Maßverkörperung bekannt. Die Teilungsperiode der Maßverkörperung wird geeignet gewählt, um die Periodizität des resultierenden Interferenzstreifenmusters an die Detektorperiodizität anzupassen.

Der vorliegenden Erfindung liegt das Problem zugrunde, eine Positionsmesseinrichtung mit einer optisch abgetasteten, ringartig umlaufenden Reflexions-Messteilung zu schaffen, bei der die Streifenmusterperiode in der Detektionsebene unabhängig vom Abtastabstand ist.

Diese Aufgabe wird erfindungsgemäß durch eine Positionsmesseinrichtung mit den Merkmalen des Anspruchs 1 gelöst. Desweiteren wird diese Aufgabe durch eine Positionsmesseinrichtung mit den Merkmalen des Anspruchs 13 gelöst. Vorteilhafte Ausführungsformen der erfindungsgemäßen Positionsmesseinrichtung ergeben sich aus den Maßnahmen in den abhängigen Ansprüchen.

Die erfindungsgemäße Positionsmesseinrichtung umfasst ein zylinderförmiges Objekt mit einer ringartig umlaufenden Reflexions-Messteilung, das um die Objekt-Längsachse drehbar angeordnet. Ferner umfasst die Positionsmesseinrichtung eine gegenüber dem drehbar angeordneten Objekt stationäre Abtasteinheit zum optischen Abtasten der Reflexions-Messteilung mit einer Lichtquelle, einem Sendegitter und einem Detektor. Hierbei durchlaufen die von der Lichtquelle emittierten Strahlenbündel das Sendegitter, beaufschlagen dann die Reflexions-Messteilung, von der eine Rückreflexion in Richtung des Detektors erfolgt, über den rotationsabhängige Positionssignale erzeugbar sind. Der optisch-wirksame Normalen-Abstand zwischen dem Detektor und der Reflexions-Messteilung ist in Abhängigkeit vom Radius des zylinderförmigen Objekts größer oder kleiner als der optisch-wirksame Normalen-Abstand zwischen dem Sendegitter und der Reflexions-Messteilung gewählt. Erfindungsgemäß beträgt der Normalen-Abstand zwischen dem Sendegitter und dem Detektor

$$\varepsilon = (2 \cdot u^2) / R$$

zuzüglich einer Toleranz von +/- 20%,
mit:

ε := Normalen-Abstand zwischen Sendegitter und Detektor
u := Optisch-wirksamer Normalen-Abstand des Sendegitters zur Reflexions-Messteilung
R := Radius des zylinderförmigen Objekts, wobei R > 0 für eine Außenabtastung und R < 0 für eine Innenabtastung.

In einer vorteilhaften Ausführungsform ist vorgesehen, dass mit Ausnahme des Sendegitters keine weiteren optischen Elemente zwischen der Lichtquelle und der Reflexions-Messteilung angeordnet sind.

Es ist möglich, dass die Reflexions-Messteilung als Gitter mit periodisch angeordneten Teilungsbereichen ausgebildet ist, die unterschiedliche optische Eigenschaften besitzen, wobei die Längserstreckungsrichtung der Teilungsbereiche parallel oder unter 45° zur Objekt-Längsachse orientiert ist.
Hierbei kann vorgesehen werden, dass

- die Reflexions-Messteilung ein weiteres Gitter mit periodisch angeordneten Teilungsbereichen umfasst, die unterschiedliche optische Eigenschaften besitzen, wobei die Längserstreckungsrichtung der Teilungsbereiche senkrecht zur Objekt-Längsachse oder unter 45° zur Objekt-Längsachse orientiert ist und
- eine zweite Abtasteinheit zum optischen Abtasten des weiteren Gitters vorgesehen ist,
- so dass über die zwei Abtasteinheiten die Rotationsbewegung des Objekts um die Objekt-Längsachse als auch die Translationsbewegung des Objekts entlang der Objekt-Längsachse messtechnisch erfassbar ist.

Die Reflexions-Messteilung kann entweder als Amplitudengitter oder als Phasengitter ausgebildet sein.
Es ist möglich, dass der radiale Abstand der Abtasteinheit von der Objekt-Längsachse größer als der Radius des zylinderförmigen Objekts gewählt wird.
Alternativ kann der radiale Abstand der Abtasteinheit von der Objekt-Längsachse auch kleiner als der Radius des zylinderförmigen Objekts gewählt werden.
In einer möglichen Ausführungsform ist die Lichtquelle als räumlich ausgedehnte Lichtquelle ausgebildet.
Alternativ kann vorgesehen sein, dass anstelle der Lichtquelle mit vorgeordnetem Sendegitter eine Punktlichtquelle in der Abtasteinheit angeordnet ist und der optisch-wirksame Normalen-Abstand zwischen dem Detektor und der Reflexions-Messteilung

- im Fall einer Außenabtastung größer ist als der optisch-wirksame Normalen-Abstand zwischen dem Emissionsbereich der Punktlichtquelle und der Reflexions-Messteilung oder
- im Fall einer Innenabtastung kleiner ist als der optisch-wirksame Normalen-Abstand zwischen dem Emissionsbereich der Punktlichtquelle und der Reflexions-Messteilung.

Fern ist es möglich, dass das Sendegitter auf einem transparenten plättchenförmigen Substrat angeordnet ist, das sich ebenfalls im Abtaststrahlengang zwischen dem Sendegitter und der Reflexions-Messteilung sowie zwischen der Reflexions-Messteilung und dem Detektor befindet, wobei sich die physikalischen Normalen-Abstände folgendermaßen aus den optisch-wirksamen Normalen-Abständen ergeben:

$$u' = u + \left(1 - \frac{1}{n_S}\right) t_S$$

$$v' = v + \left(1 - \frac{1}{n_S}\right) t_D$$

mit

u := Optisch-wirksamer Normalen-Abstand des Sendegitters zur Reflexions-Messteilung
u' := Physikalischer Normalen-Abstand des Sendegitters zur Reflexions-Messteilung
v := Optisch-wirksamer Normalen-Abstand der Reflexions-Messteilung zur Detektionsebene D
v' := Physikalischer Normalen-Abstand der Reflexions-Messteilung zur Detektionsebene D
$n_S$ := Brechungsindex des Substrats
$t_S$ := Substratdicke zwischen Sendegitter und Reflexions-Messteilung
$t_D$ := Substratdicke zwischen Reflexions-Messteilung und Detektionsebene

Desweiteren kann vorgesehen sein, dass das Sendegitter auf der Seite eines transparenten plättchenförmigen Substrats angeordnet ist, die der Reflexions-Messteilung zugewandt ist, wobei sich der physikalische Normalen-Abstand folgendermaßen aus dem optisch-wirksamen Normalen-Abstand ergibt:

$$v' = v + \left(1 - \frac{1}{n_S}\right) t_D$$

mit

   v := Optisch-wirksamer Normalen-Abstand der Reflexions-Messteilung zur Detektionsebene D
   v' := Physikalischer Normalen-Abstand der Reflexions-Messteilung zur Detektionsebene D
   $n_S$ := Brechungsindex des Substrats
   $t_D$ := Substratdicke zwischen Reflexions-Messteilung und Detektionsebene

Vorzugsweise liegt die optisch-wirksame Position des Sendegitters näher an der Objekt-Längsachse als die optisch wirksame Position des Detektors, wobei die optisch-wirksame Position des Sendegitters durch den optisch-wirksamen Normalen-Abstand zwischen Sendegitter und Reflexions-Messteilung bestimmt ist und die optisch-wirksame Position des Detektors durch den optisch-wirksamen Normalen-Abstand zwischen Detektor und Reflexions-Messteilung.

Als entscheidender Vorteil der erfindungsgemäßen Positionsmesseinrichtung resultiert nunmehr eine Unabhängigkeit der Streifenmusterperiode in der Detektionsebene vom Abtastabstand. Auch bei eventuellen Schwankungen des Abtastabstands bleibt die Periodizität des erzeugten Streifenmusters in der Detektionsebene unverändert. Da die Streifenmusterperiode damit stets zur Periodizität des Detektors passt, bleiben die Abtastsignale auch bei Schwankungen des Abtastabstandes stabil. Durch die entsprechend großen Anbautoleranzen ist diese Positionsmesseinrichtung einfach zu montieren.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

Es zeigt

Figur 1a   eine stark vereinfachte räumliche Ansicht einer ersten Ausführungsform der erfindungsgemäßen Positionsmesseinrichtung;

Figur 1b   eine vergrößerte Teil-Darstellung aus Figur 1a zur Erläuterung der Sendegitter-Abbildung in der erfindungsgemäßen Positionsmesseinrichtung;

Figur 2   eine schematisierte Darstellung eines zweiten Ausführungsbeispiels der erfindungsgemäßen Positionsmesseinrichtung;

Figur 3   eine schematisierte Darstellung eines dritten Ausführungsbeispiels der erfindungsgemäßen Positionsmesseinrichtung;

Figur 4   eine schematisierte Darstellung eines vierten Ausführungsbeispiels der erfindungsgemäßen Positionsmesseinrichtung;

Figur 5   eine schematisierte Darstellung eines fünften Ausführungsbeispiels der erfindungsgemäßen Positionsmesseinrichtung;

Figur 6   eine schematisierte Darstellung eines sechsten Ausführungsbeispiels der erfindungsgemäßen Positionsmesseinrichtung;

Figur 7   eine schematisierte Darstellung eines siebten Ausführungsbeispiels der erfindungsgemäßen Positionsmesseinrichtung.

Figur 1a zeigt eine stark vereinfachte räumliche Ansicht einer ersten Ausführungsform der erfindungsgemäßen Positionsmesseinrichtung. Diese umfasst zum einen ein zylinderförmiges Objekt 2, das um die Objekt-Längsachse A drehbar angeordnet ist. Am Objekt 2 ist als Maßverkörperung eine ringartig umlaufende Reflexions-Messteilung 2.1 vorgesehen. Stationär gegenüber dem drehbar angeordneten Objekt 2 ist zum anderen eine Abtasteinheit 1 vorgesehen, die zur optischen Abtastung der Reflexions-Messteilung 2.1 und damit zur Erzeugung rotationsabhängiger Positionssignale dient. Die Abtasteinheit 1 umfasst verschiedene Komponenten, die in Figur 1a nicht gezeigt sind; hierzu gehören u.a. eine Lichtquelle, ggf. ein Sendegitter sowie ein Detektor.

Beim Objekt 1 kann es sich etwa um ein rotierendes Maschinenteil handeln. An eine - nicht dargestellte - Maschinensteuerung werden von der erfindungsgemäßen Positionsmesseinrichtung die erzeugten Positionssignale übertragen, die diese z.B. zur Positionierung des Objektes 1 verwendet.

Die Reflexions-Messteilung 2.1 ist im vorliegenden Ausführungsbeispiel als Gitter mit periodisch angeordneten Teilungsbereichen ausgebildet, die in Figur 1a hell und dunkel dargestellt sind und unterschiedliche optische Eigenschaften besitzen. Die Längserstreckungsrichtung der Teilungsbereiche der Reflexions-Messteilung 2.1 ist wie aus der Figur ersichtlich parallel zur Objekt-Längsachse A orientiert. Im Fall einer Ausbildung der Reflexions-Messteilung 2.1 als Amplitudengitter besitzen die hell und dunkel dargestellten Teilungsbereiche etwa unterschiedliche Reflexionseigenschaften. Es ist aber auch möglich, die Reflexions-Messteilung als Phasengitter auszubilden, bei dem die verschiedenen Teilungsbereiche eine unterschiedliche phasenschiebende Wirkung auf die darauf einfallenden Strahlenbündel ausüben.

Im Hinblick auf die Reflexions-Messteilung 2.1 ist es möglich, dass diese auf einem Trägerkörper angeordnet wird, der dann wiederum erst am Objekt 2 geeignet befestigt wird. Alternativ hierzu kann die Reflexions-Messteilung 2.1 im Rahmen der vorliegenden Erfindung aber auch direkt auf der Oberfläche des Objektes 2 aufgebracht sein.

Zur weiteren Erläuterung der geometrischen Zusammenhänge sei nunmehr auf die Figur 1b verwiesen, die eine vergrößerte Schnittansicht der Positionsmesseinrichtung aus Figur 1a mit der darauf angeordneten Reflexions-Messteilung 2.1 und den Abbildungsstrahlengang für einen Sendegitterspalt SG zeigt.

Die gekrümmte Oberfläche des zylinderförmigen Objektes 1 wirkt bei einer derartigen Abbildung wie ein konvexer Spiegel, der die Brennweite f aufweist, mit

$$f = \frac{R}{2} \qquad \text{(Gl. 5)}$$

f :=     Brennweite der gekrümmten Objektoberfläche
R :=     Radius des zylinderförmigen Objekts

Über eine derartige Abbildung werden die Sendegitterspalte, von denen in Figur 1b lediglich ein einziger Sendegitterspalt SG gezeigt ist, gemäß der nachfolgenden Abbildungsgleichung in das Sendegitter-Bild SG' abgebildet:

$$\frac{1}{f} = \frac{2}{R} = -\frac{1}{u} + \frac{1}{u_i} \qquad \text{(Gl. 6)}$$

f :=     Brennweite der gekrümmten Objektoberfläche
R :=     Radius des zylinderförmigen Objekts
u :=     Optisch-wirksamer Normalen-Abstand des Sendegitters zur Reflexions-Messteilung
$u_i$ :=     Optisch-wirksamer Normalen-Abstand des Sendegitter-Bildes zur Reflexions-Messteilung

Die eingangs erläuterten Gleichungen 1 - 4, die für ein solches Abtastprinzip in Verbindung mit einer planaren Reflexions-Messteilung anwendbar sind, können grundsätzlich auf das vorliegende System mit einer gekrümmten bzw. trommelförmigen Reflexions-Messteilung 2.1 übertragen werden. Es muss hierbei aber berücksichtigt werden, dass durch die Krümmung der Reflexions-Messteilung 2.1 das Sendegitter in ein virtuelles Sendegitter-Bild SG' abgebildet wird, das sich in einem optisch-wirksamen Normalen-Abstand $u_i$ von der Reflexions-Messteilung 2.1 befindet. Deshalb muss in den eingangs erläuterten Gleichungen 1-4 der optisch-wirksame Abstand u durch den Normalen-Abstand $u_i$ des virtuellen Sendegitter-Bildes SG' ersetzt werden.

Um die gewünschte Unabhängigkeit des Systems von Schwankungen des Abtastabstands zu gewährleisten, wird in den folgenden Überlegungen davon ausgegangen, dass das Sendegitter und der Detektor in um den Betrag bzw. Normalen-Abstand ε differierenden, optisch-wirksamen Normalen-Abständen u, v vom Scheitel der ringförmigen Reflexions-Messteilung angeordnet sind, d.h.

$$v = u + \varepsilon \qquad \text{(Gl. 7)}$$

u :=     Optisch-wirksamer Normalen-Abstand des Sendegitters zur Reflexions-Messteilung
v :=     Optisch-wirksamer Normalen-Abstand der Reflexions-Messteilung zur Detektionsebene D
ε :=     Normalen-Abstand des Sendegitters zum Detektor

Gefordert ist nunmehr, dass eine eventuelle Abstandsänderung in erster Näherung nicht zu einer Änderung des Vergrößerungsfaktors m führt. Der Vergrößerungsfaktor m beschreibt dabei das Verhältnis der Periodizität $d_D$ des Detektors bzw. des detektierten Streifenmusters zur Periodizität $d_M$ der Reflexions-Messteilung gemäß

$$m = \frac{d_D}{d_M} \qquad \text{(Gl. 8)}$$

m :=      Vergrößerungsfaktor
$d_D$ :=      Periodizität des Detektors
$d_M$ :=      Periodizität der Reflexions-Messteilung

Der Vergrößerungsfaktor m ergibt sich hierbei folgendermaßen aus den verschiedenen Abständen:

$$m = 1 + \frac{v}{u_i} \qquad \text{(Gl. 9)}$$

m :=      Vergrößerungsfaktor
v :=      Optisch-wirksamer Normalen-Abstand der Reflexions-Messteilung zur Detektionsebene D
$u_i$ :=      Optisch-wirksamer Normalen-Abstand des Sendegitter-Bildes zur Reflexions-Messteilung

Setzt man Gleichung 9 in die obige Abbildungsgleichung 6 ein, so ergibt sich für den Vergrößerungsfaktor m in Abhängigkeit der verschiedenen Systemparameter

$$m(u) = 1 + (u + \varepsilon)\left(\frac{2}{R} + \frac{1}{u}\right) \qquad \text{(Gl. 10)}$$

m(u) :=      Vergrößerungsfaktor
u :=      Optisch-wirksamer Normalen-Abstand des Sendegitters zur Reflexions-Messteilung
$\varepsilon$ :=      Normalen-Abstand des Sendegitters zum Detektor
R :=      Radius des zylinderförmigen Objekts

Der Vergrößerungsfaktor m(u) ist hierbei näherungsweise konstant, wenn die erste Ableitung nach u gleich null ist. Dies ist der Fall, wenn der Normalen-Abstand $\varepsilon$ zwischen Sendegitter und Detektor folgendermaßen gewählt wird:

$$\varepsilon = \frac{2u^2}{R} \qquad \text{(Gl. 11)}$$

u :=      Optisch-wirksamer Normalen-Abstand des Sendegitters zur Reflexions-Messteilung
$\varepsilon$ :=      Normalen-Abstand des Sendegitters zum Detektor
R :=      Radius des zylinderförmigen Objekts

Befindet sich also der Detektor bzw. die Detektionsebene D im Normalen-Abstand $\varepsilon$ hinter bzw. beabstandet von der Sendegitterebene, so ist bei Änderungen des Abtastabstands die Änderung des Vergrößerungsfaktors m minimal. In möglichen Ausführungsformen der erfindungsgemäßen Positionsmesseinrichtung kann hierbei der Normalen-Abstand $\varepsilon$ gemäß Gleichung 11 zuzüglich einer Toleranz von +/- 20% gewählt werden.

Wenn die Reflexions-Messteilung 2.1 als Amplitudengitter ausgebildet ist, entstehen am Detektor zwei überlagerte Streifenmuster gleicher Periodizität, die aus der Interferenz der +1. und 0. bzw. der 0. und -1. Beugungsordnung der Reflexions-Messteilung resultieren. In der oben zitierten Veröffentlichung von R. M. Pettigrew wird dieser Fall als "geometrisches Bild" bezeichnet. Damit die beiden Streifenmuster gleichphasig überlagert werden und damit maximalen Kontrast erzeugen, muss die Talbot-Bedingung analog zur Gleichung 3 erfüllt werden, wobei wieder u durch $u_i$ ersetzt und Gleichung 6, 7 und 11 eingesetzt werden.

$$\frac{\lambda}{n d_M^2} = \frac{1}{u_i} + \frac{1}{v} = \frac{2}{R} + \frac{1}{u} + \frac{1}{u + \frac{2u^2}{R}} \qquad \text{(Gl. 12)}$$

Dabei muss n ganzzahlig und größer null sein.

Im Fall einer konkreten Realisierung einer derartigen Positionsmesseinrichtung steht oftmals die Periodizität $d_D$ des verwendeten Detektors am Anfang der Dimensionierungsüberlegungen, da für mehrere Objekt-Durchmesser R möglichst der identische Detektor verwendet werden soll. Dadurch lassen sich die erforderlichen Initialkosten für die Herstellung der Detektoren reduzieren. Die Ermittlung der restlichen Systemparameter, insbesondere der Periodizität $d_M$ der Reflexions-Messteilung sowie der Periodizität $d_S$ des Sendegitters kann wie nachfolgend erläutert vorgenommen werden.

So liefert Gleichung 12 durch Ersetzen der Periodizität $d_M$ der Reflexions-Messteilung mit Gleichung 8, 10 und 11 die nachfolgende Gleichung 13:

$$\frac{\lambda}{n\,d_D^{\,2}}\left(1 + \left(u + 2\frac{u^2}{R}\right)\left(\frac{2}{R} + \frac{1}{u}\right)\right)^2 - \frac{2}{R} - \frac{1}{u} - \frac{1}{u + \frac{2u^2}{R}} = 0 \quad \text{(Gl. 13)}$$

λ:=      Lichtwellenlänge
u :=      Optisch-wirksamer Normalen-Abstand des Sendegitters zur Reflexions-Messteilung
v :=      Optisch-wirksamer Normalen-Abstand der Reflexions-Messteilung zur Detektionsebene
$d_D$ :=      Periodizität des Detektors
R :=      Radius des zylinderförmigen Objekts
n :=      1, 2, 3, .....

Eine Ermittlung von Nullstellen in Gleichung 13 liefert den optisch-wirksamen Normalen-Abstand u, woraus mit der Gleichung 11 der Normalen-Abstand ε, mit Gleichung 7 der optisch-wirksame Normalen-Abstand v und mit Gleichung 8 die Periodizität $d_M$ der Reflexions-Messteilung bestimmt werden kann.

Abschließend muss noch die Periodizität $d_S$ des Sendegitters folgendermaßen ermittelt werden:

$$d_S = \frac{u}{v} d_D \qquad\qquad \text{(Gl. 14)}$$

$d_S$ :=      Periodizität des Sendegitters
$d_D$ :=      Periodizität des Detektors
u :=      Optisch-wirksamer Normalen-Abstand des Sendegitters zur Reflexions-Messteilung
v :=      Optisch-wirksamer Normalen-Abstand der Reflexions-Messteilung zur Detektionsebene

In einer möglichen Ausführungsform der erfindungsgemäßen Positionsmesseinrichtung sind beispielsweise die nachfolgenden Parameter systembedingt vorgegeben:

$$R = 10 \text{ mm}$$

$$d_D = 40 \mu m$$

$$\lambda = 850 nm$$

$$n = 1$$

Aus den obigen Gleichungen lassen sich dann die restlichen Systemparameter ermitteln und ergeben sich folgendermaßen:

$$u = 0{,}714 mm$$

$$v = 0{,}816\,\text{mm}$$

$$d_M = 17{,}34\,\mu m \quad (3624 \text{ Signalperioden / Umfang})$$

$$d_S = 35{,}00\,\mu m$$

Ein zweites Ausführungsbeispiel der erfindungsgemäßen Positionsmesseinrichtung ist in Figur 2 schematisiert dargestellt. Diese umfasst das um die Rotationsachse bzw. Objekt-Längsachse A rotierende Objekt 20 mit der am Außenumfang angeordneten Reflexions-Messteilung 21. Die Reflexions-Messteilung 21 ist als Gitter mit periodisch angeordneten Teilungsbereichen ausgebildet, die unterschiedliche optische Eigenschaften, besitzen. Es ist hierbei im Rahmen der vorliegenden Erfindung möglich, die Reflexions-Messteilung 21 als Amplitudengitter auszubilden, bei dem die Teilungsbereiche unterschiedliche Reflexionseigenschaften besitzen. Alternativ kann die Reflexions-Messteilung aber auch als Phasengitter ausgebildet sein; die Teilungsbereiche besitzen in diesem Fall unterschiedliche phasenschiebende Wirkungen auf die einfallenden Strahlenbündel. Die Längserstreckungsrichtung der Teilungsbereiche der Reflexions-Messteilung 21 ist parallel zur Objekt-Längsachse A orientiert.

Desweiteren ist seitens der Positionsmesseinrichtung eine Abtasteinheit 10 vorgesehen, in der eine Lichtquelle 11, ein Sendegitter 13 sowie ein Detektor 12 angeordnet sind. Die Lichtquelle 11 ist im vorliegenden Ausführungsbeispiel als räumlich ausgedehnte Lichtquelle ausgebildet, z.B. als LED. Als Sendegitter 13 fungiert ein Transmissionsgitter mit alternierend angeordneten durchlässigen und undurchlässigen Teilungsbereichen, das auf einem transparenten, plättchenförmigen Substrat 14 angeordnet ist. Der Detektor 12 ist als bekannter strukturierter Photodetektor ausgebildet, der eine Vielzahl von Photodioden in der Detektionsebene umfasst, die gruppenweise zusammengeschaltet sind.

Mit Ausnahme des Sendegitters 13 sind in der erfindungsgemäßen Positionsmesseinrichtung keine weiteren optischen Elemente zwischen der Lichtquelle 11 und der Reflexions-Messteilung 21 angeordnet; es liegt demzufolge eine Abtastung der Reflexions-Messteilung 21 mit divergenter Beleuchtung vor.

Im Fall der Rotation des Objekts 20 um die Objekt-Längsachse A resultiert in der Detektionsebene ein rotationsabhängig moduliertes Streifenmuster, das über den Detektor 12 erfasst und in mehrere phasenverschobene Positionssignale, respektive Inkrementalsignale, umgewandelt wird.

In diesem Ausführungsbeispiel ist der radiale Abstand der Abtasteinheit 10 von der Objekt-Längsachse A größer als der Radius R des zylinderförmigen Objekts 20 gewählt, so dass hier eine nachfolgend als Außenabtastung bezeichnete Abtastung des zylinderförmigen Objekts 20 vorliegt. Die Reflexions-Messteilung 21 ist hierbei auf der Außenseite des Objekts 20 angeordnet. In diesem Fall wird der Radius R gemäß R > 0 gewählt.

Über die o.g. Überlegungen hinaus ist im vorliegenden Ausführungsbeispiel demzufolge noch zu berücksichtigen, dass das Sendegitter 13 auf einem transparenten, plättchenförmigen Substrat 14 angeordnet ist, das sich somit ebenfalls im Abtaststrahlengang befindet, und zwar im Abtaststrahlengang sowohl zwischen dem Sendegitter 13 und der Reflexions-Messteilung 21 als auch zwischen der Reflexions-Messteilung 21 und der Detektionsebene mit dem Detektor 12. Soll das Sendegitter 13 bzw. die Detektionsebene gemäß den obigen Gleichungen 6 - 13 im optischwirksamen Normalen-Abstand u bzw. v zur Reflexions-Messteilung 21 angeordnet werden, so müssen in diesem Fall die optisch-wirksamen Normalen-Abstände u, v auf die tatsächlichen Abstandswerte Werte u' bzw. v' korrigiert werden, welche nachfolgend als physikalische Normalen-Abstände u', v' bezeichnet seien. Besitzt das Substrat 14 den Brechungsindex $n_S$ und die Dicke $t_S = t_D$, so vergrößern sich die optisch-wirksamen Normalen-Abstände u und v in guter Näherung folgendermaßen auf die physikalischen Normalen-Abstände u', v':

$$u' = u + \left(1 - \frac{1}{n_S}\right)t_S \qquad \text{(Gl. 15.1)}$$

$$v' = v + \left(1 - \frac{1}{n_S}\right)t_D \qquad \text{(Gl. 15.2)}$$

$t_S$ :=     Substratdicke zwischen Sendegitter und Reflexions-Messteilung

$t_D$ :=     Substratdicke zwischen Reflexions-Messteilung und Detektionsebene

Beim dargestellten Ausführungsbeispiel der Positionsmesseinrichtung ist wie aus Figur 2 ersichtlich der physikalische Normalen-Abstand v' zwischen dem Detektor 12 und der Reflexions-Messteilung 21 größer als der physikalische Normalen-Abstand u' zwischen dem Sendegitter 13 und der Reflexions-Messteilung 21. Die physikalischen Normalen-Abstände u' und v' unterscheiden sich hierbei um den Normalen-Abstand $\varepsilon$, der gemäß der o.g. Gleichung 11 gewählt wurde.

Im Ausführungsbeispiel der Figur 2 mit der dort vorgesehenen Außenabtastung der Reflexions-Messteilung 21 und der Sendeteilung auf der der Reflexions-Messteilung 21 abgewandten Seite sind z.B. die substratspezifischen Parameter bzw. Substratdicken $t_S = t_D$ und $n_S$ folgendermaßen vorgegeben:

$$t_S = t_D = 0{,}5mm$$

$$n_S = 1{,}51\ (BK7)$$

Mit Hilfe der Gleichungen 15.1, 15.2, 13, 11, 8 und 7 ergibt sich dann für die physikalischen Normalen-Abstände u' und v':

$$u' = 0{,}882mm$$

$$v' = 0{,}985mm$$

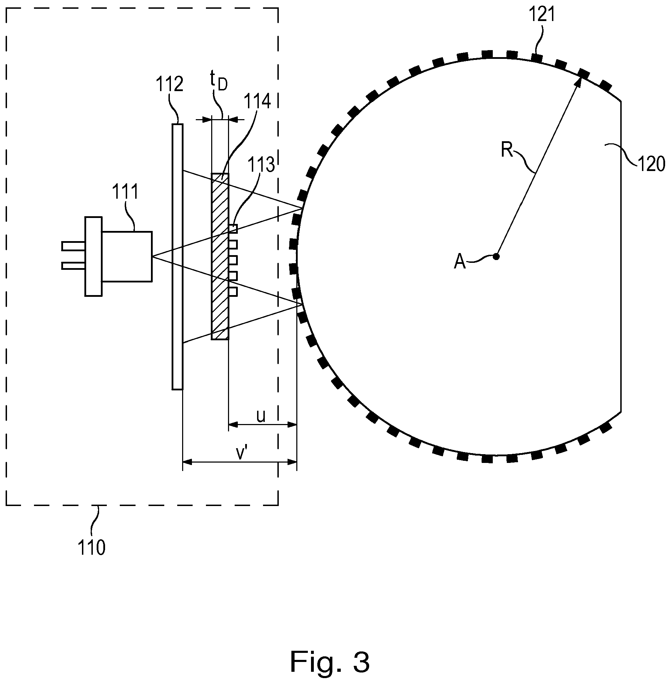

Ein drittes Ausführungsbeispiel der erfindungsgemäßen Positionsmesseinrichtung ist in Figur 3 dargestellt; vorgesehen ist wiederum eine Außenabtastung mit R > 0. Diese Variante unterscheidet sich vom vorhergehenden Ausführungsbeispiel lediglich dadurch, dass das Sendegitter 113 in der Abtasteinheit 110 nunmehr auf der Seite des plättchenförmigen Substrats 114 angeordnet ist, die der Reflexions-Messteilung 121 zugewandt ist. Die o.g. substratspezifischen Parameter bzw. Substratdicken sind dann $t_S = 0$ und $t_D > 0$, so dass nur noch die Transformation des optisch wirksamen Normalen-Abstands v in den physikalischen Normalen-Abstand v' gemäß Gleichung 15.2 notwendig ist. Mit den nachfolgenden substratspezifischen Parametern $t_D$ und $n_S$ gemäß

$$t_D = 0{,}15mm$$

$$n_S = 1{,}51\ (BK7)$$

ergibt sich mit Hilfe der Gleichungen 15.2, 13, 11, 8 und 7 dann für die Normalen-Abstände u und v'

$$u = 0{,}714mm$$

$$v' = 0{,}867mm.$$

Ansonsten entspricht diese Variante dem vorab erläuterten Ausführungsbeispiel.

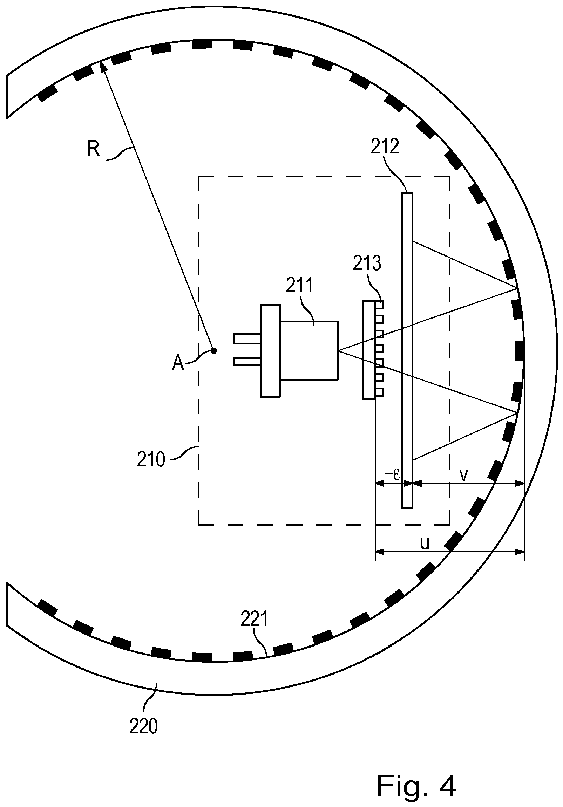

Ein viertes Ausführungsbeispiel der erfindungsgemäßen Positionsmesseinrichtung ist in Figur 4 dargestellt. Das zylinderförmige Objekt 220 ist nunmehr nicht als massive Trommel ausgebildet wie in den vorhergehenden Ausführungsbeispielen, sondern besteht nur aus einem Zylinderring. Dieser ist um die Objekt-Längsachse A drehbar angeordnet. An der Innenseite des Zylinderrings ist die Reflexions-Messteilung 221 und im Inneren des Zylinderrings die Abtasteinheit 210 mit Lichtquelle 211, Sendegitter 213 und Detektor 212 angeordnet. In diesem Ausführungsbeispiel liegt demzufolge eine nachfolgend als Innenabtastung bezeichnete Abtastung der Reflexions-Messteilung 221 vor. Dies bedeutet, dass der radiale Abstand der Abtasteinheit 210 von der Objekt-Längsachse A kleiner als der Radius R des zylinderförmigen Objekts 220 gewählt ist. Die obigen Gleichungen 5, 6 sowie 10-13 können auch in diesem Fall verwendet werden, wenn für den Radius R ein entsprechend negativer Wert eingesetzt wird, d.h. für die Innenabtastung gilt R < 0. Aus Gleichung 11 ergibt sich für den Abstand $\varepsilon$ zwischen Sendegitter 213 und Detektor 212 dann ebenfalls ein negativer Wert. Das bedeutet, dass das Sendegitter 213 weiter von der Reflexions-Messteilung 221 entfernt ist als die Detektionsebene, wie dies aus Figur 4 ersichtlich ist. Diese Ausführungsform ist insbesondere dann vorteilhaft, wenn die erfindungsgemäße Positionsmesseinrichtung z.B. auf der Innenseite einer Lagerung angebaut werden muss.

Sowohl bei der Außenabtastung wie auch bei der Innenabtastung ist in der erfindungsgemäßen Positionsmesseinrichtung demzufolge vorgesehen, dass die optisch wirksame Position des Sendegitters näher an der Objekt-Längsachse A bzw. Rotationsachse des Objekts liegt als die optisch wirksame Position des Detektors bzw. der Detektionsebene. Die optisch-wirksame Position des Sendegitters wird hierbei durch den optisch-wirksamen Normalen-Abstand u zwischen Sendegitter und Reflexions-Messteilung bestimmt; die optisch-wirksame Position des Detektors durch den optisch-wirksamen Normalen-Abstand v zwischen Detektor und Reflexions-Messteilung.

Wie desweiteren aus Figur 4 ersichtlich, befindet sich das plättchenförmige Substrat, auf dem das Sendegitter 213 angeordnet ist, nicht in den Strahlengängen zwischen Sendegitter 213, Reflexions-Messteilung 221 und Detektor 212. Von daher ist in dieser Ausführungsform keine Transformation der optisch-wirksamen Normalen-Abstände u, v in physikalische Normalen-Abstände u', v' erforderlich, d.h. es gilt hier u = u' und v = v'.

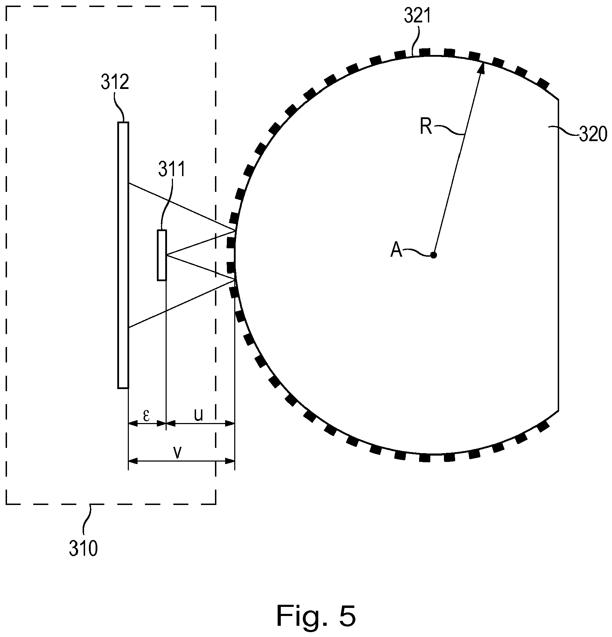

In Figur 5 ist eine fünfte Ausführungsform der erfindungsgemäßen Positionsmesseinrichtung schematisiert dargestellt. Vorgesehen ist nunmehr wieder eine Außenabtastung der auf dem Objekt 320 angeordneten Reflexions-Messteilung 321 über die Abtasteinheit 310, d.h. es gilt wieder R > 0. Die Abtasteinheit 310 umfasst hierbei neben dem Detektor 312 lediglich noch eine Lichtquelle 311. Anstelle der vorher jeweils vorgesehenen räumlich ausgedehnten Lichtquellen mit vorgeordnetem Sendegitter weist diese Variante als Lichtquelle 311 eine geeignete Punktlichtquelle auf, das Sendegitter entfällt hierbei. Die gewählte Punktlichtquelle weist eine besonders kleine Emissionsfläche auf, geeignet sind z.B. Laserdioden oder aber LEDs mit hinreichend kleiner Emissionsfläche. Vorzugsweise wird die Ausdehnung der Emissionsfläche entlang der Messrichtung kleiner gleich der halben Periodizität $d_S$ des Sendegitters gemäß Gleichung 14 gewählt. Zu beachten ist bzgl. der Ausdehnung der Emissionsfläche der Punktlichtquelle entlang der Messrichtung ferner, dass diese möglichst nicht der Periodizität $d_S$ des Sendegitters oder einem ganzzahligen Vielfachen desselbigen entsprechen darf. Diese Punktlichtquelle wirkt damit wie ein Sendegitter mit nur einem einzigen Sendespalt.

Wie aus Figur 5 ersichtlich, ist im Fall der dargestellten Außenabtastung mit R > 0 der optisch-wirksame Normalen-Abstand v zwischen dem Detektor 312 und der Reflexions-Messteilung 321 größer gewählt als der optisch-wirksame Normalen-Abstand u zwischen dem Emissionsbereich der punktförmigen Lichtquelle 311 und der Reflexions-Messteilung 321, nämlich um den Abstand $\varepsilon$, der gemäß den oben erläuterten Beziehungen bestimmt wurde.

Als vorteilhaft erweist sich bei dieser Ausführungsform der erfindungsgemäßen Positionsmesseinrichtung, dass kein Sendegitter erforderlich ist.

Selbstverständlich kann mit einer punktförmigen Lichtquelle auch eine Innenabtastung mit R < 0 realisiert werden, bei der der optisch-wirksame Normalen-Abstand zwischen dem Detektor und der Reflexions-Messteilung kleiner ist als der optisch-wirksame Normalen-Abstand zwischen dem Emissionsbereich der Punktlichquelle und der Reflexions-Messteilung.

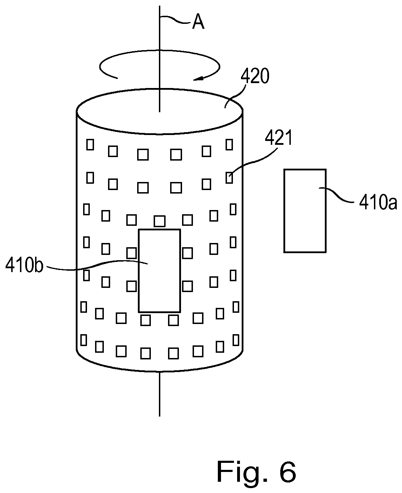

Eine sechste Ausführungsform der erfindungsgemäßen Positionsmesseinrichtung ist in Figur 6 schematisiert gezeigt. Unterschiedlich zu den vorhergehenden Ausführungsbeispielen ist hier nunmehr die abgetastete Reflexions-Messteilung 421 ausgebildet, nämlich in Form eines sogenannten Kreuzgitters. Dieses umfasst zusätzlich zum ersten Gitter der oben diskutierten Ausführungsbeispiele ein weiteres Gitter mit periodisch angeordneten Teilungsbereichen, die unterschiedliche optische Eigenschaften besitzen, wobei die Längserstreckungsrichtung der Teilungsbereiche senkrecht zur Objekt-Längsachse A orientiert ist. Ferner ist eine zweite Abtasteinheit 410b zum optischen Abtasten des weiteren Gitters vorgesehen, so dass über die zwei Abtasteinheiten 410a, 410b die Rotationsbewegung des Objekts 420 um die Objekt-Längsachse A als auch die Translationsbewegung des Objekts 420 entlang der Objekt-Längsachse A messtechnisch erfassbar ist.

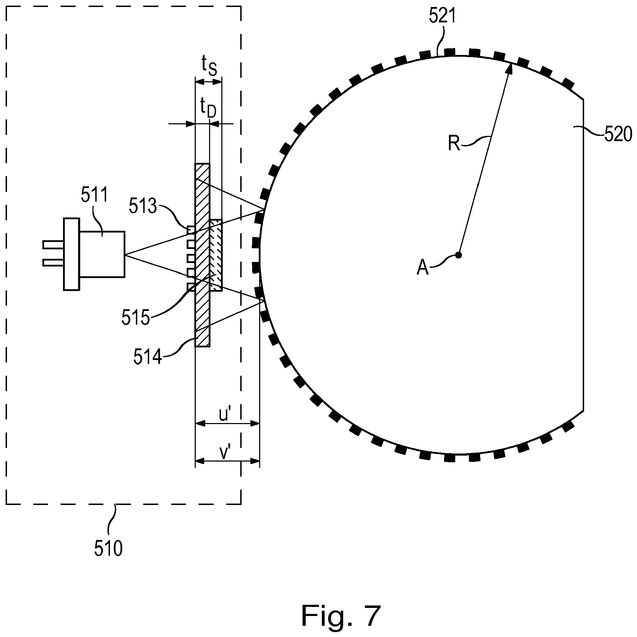

Eine siebte Ausführungsform der erfindungsgemäßen Positionsmesseinrichtung ist in Figur 7 schematisiert dargestellt. Eine transparente Platte 515 ist hier zusätzlich zwischen dem Sendegitter 513 und der Reflexions-Messteilung 521 angeordnet. Die transparente Platte 515 wird aber aufgrund der begrenzten seitliche Ausdehnung nicht von den Strahlenbündeln durchlaufen, die von der Reflexions-Messteilung 521 zurück zur Detektionsebene propagieren. Dadurch ergeben sich unterschiedliche Substratdicken $t_S$ und $t_D$. Als Besonderheit dieser Ausführungsform resultiert nunmehr, dass sich das Sendegitter 513 und die Detektionsebene durch eine geeignete Wahl der Substratdicken $t_S$ und $t_D$ im gleichen physikalischen Normalen-Abstand u', v' zur Reflexions-Messteilung 521 angeordnet sind, obwohl die zugehörigen optisch-wirksamen Normalen-Abstände u, v sich um den Abstand $\varepsilon$ unterscheiden. Es gilt hier somit

$$u' = v' \qquad (Gl.\ 16)$$

Gleichung 17 ergibt zusammen mit den Gleichungen 15.1 und 15.2 eine Bedingung für die Substratdicken $t_S$ und $t_D$ gemäß:

$$t_S - t_D = \frac{n_S}{n_S - 1}(v - u) \qquad (Gl.\ 17)$$

Mit den Gleichungen 7 und 11 ergibt sich daraus

$$t_S - t_D = \frac{n_S}{n_S - 1} \cdot \frac{u^2}{R} \qquad (Gl.\ 18)$$

Bei Verwendung eines Amplitudengitters als Reflexions-Messteilung 521 muss der optisch-wirksame Normalen-Abstand u mit der zusätzlichen Bedingung nach Gleichung 13 festgelegt werden.

Die siebte Ausführungsform der erfindungsgemäßen Positionsmesseinrichtung kann besonders für eine interferentielle Variante vorteilhaft sein, wenn - wie nachfolgend beschrieben - in der Detektionsebene Gitter notwendig sind, die auf demselben Substrat wie das Sendegitter hergestellt werden sollen. Sie kann auch analog für eine Reflexions-Messteilung verwendet werden, die auf der Innenseite eines Zylinderrings aufgebracht ist. In diesem Fall muss die transparente Platte die Ausdehnung des - in der Figur nicht erkennbaren - Detektors überdecken, nicht aber diejenige des Sendegitters.

Wie bereits oben angedeutet ist es möglich, anstelle einer als Amplitudengitter vorgesehenen Reflexions-Messteilung diese als Phasengitter auszubilden. Wird der Phasenhub des Phasengitters gleich λ/4 gewählt, so liefert das Gitter analog zum Amplitudengitter in Reflexion nullte und erste Beugungsordnungen, die zur Signalerzeugung beitragen. In den obigen Gleichungen 3, 12 und 13 wäre in diesem Fall n halbzahlig zu wählen, also n = 0.5, 1.5, 2.5, ....

Die erfindungsgemäße Positionsmesseinrichtung kann desweiteren auch als hochauflösendes interferentielles System mit einer sehr kleinen Periodizität der Reflexions-Messteilung ausgebildet werden. In einem solchen interferentiellen System wird die Reflexions-Messteilung als Phasengitter-Messteilung mit unterdrückter nullter Beugungsordnung gewählt. Die Grundlagen einer derartigen Abtastung sind in der oben zitierten Veröffentlichung von R.M. Pettigrew als "Beugungsbild" beschrieben. Das Besondere an dieser Abtastung ist, dass die Talbot-Bedingung gemäß den Gleichungen 3, 12 und 13 entfällt. Dadurch sind trotz kleiner Periodizitäten der Reflexions-Messteilung sehr große Abstandstoleranzen möglich. Die Periodizität der Reflexions-Messteilung halbiert sich in diesem Fall, so dass anstelle der oben erwähnten Gleichung 8 die nachfolgende Gleichung 8' gilt:

$$m = \frac{2\,d_D}{d_M} \qquad (Gl.\ 8')$$

Die Gleichungen 9-11, 14 sowie 15.1 und 15.2 gelten unverändert weiter.

In Bezug auf eine solche interferentielle Variante der erfindungsgemäßen Positionsmesseinrichtung seien nachfolgend die konkreten Dimensionierungsdaten eines möglichen Ausführungsbeispiels angegeben. Mit R = 10mm, u = 1mm und 9000 Teilungsperioden bzw. 18000 Signalperioden pro Umfang der Reflexions-Messteilung ergeben sich die Größen v, $d_M$ und $d_D$ folgendermaßen:

$$v = 1{,}2mm$$

$$d_M = 6{,}981\mu m$$

$$d_D = 8{,}517\mu m$$

Problematisch hierbei erweist sich die Herstellung strukturierter Photodektoren mit einer derart kleinen Periodizität $d_D$. Dieses Problem lässt sich umgehen, wenn anstelle des Detektors in der Detektionsebene ein Gitter angeordnet wird, dessen Periodizität $d_V$ geringfügig von der Periodizität $d_D$ des Detektors abweicht. In diesem Fall resultiert in der Detektionsebene eines dem Gitter nachgeordneten Detektors dann ein Streifenmuster mit einer deutlich vergrößerten Periodizität. Dieses Streifenmuster ist dann mittels eines Detektors mit deutlich größerer Detektor-Periodizität $d_{str}$ einfach erfassbar. Hierbei gilt:

$$\frac{1}{d_V} = \frac{1}{d_D} \pm \frac{1}{d_{str}} \qquad \text{(Gl. 19)}$$

$d_V :=$      Periodizität des zusätzlichen Gitters in der Detektionsebene
$d_D :=$      Periodizität des Detektors
$d_{str} :=$      Periodizität des strukturierten Detektors

Im vorliegenden Dimensionierungsbeispiel kann auf diese Art und Weise als Detektor ein strukturierter Foto-detektor mit einer Periodizität $d_{str} = 40\ \mu m$ eingesetzt werden, wenn ein entsprechendes Gitter mit der Periodizität $d_V = 7.022\mu m$ verwendet wird.

In einer weiteren alternativen Ausführungsform der erfindungsgemäßen Positionsmesseinrichtung kann im Unterschied zur Figur 6 die Reflexions-Messteilung als Kreuzgitter ausgeführt sein, dessen Gitterrichtungen nicht axial und azimutal verlaufen, sondern diagonal, vorzugsweise unter $\pm 45°$ zur Objekt-Längsachse A. In diesem Fall liegt entlang der Gitterrichtungen ein Krümmungsradius R' vor, der größer als R ist. In den obigen Formeln ist deshalb anstelle des Radius R jeweils der Krümmungsradius R' entlang der Gitterrichtungen einzusetzen.

## Patentansprüche

1. Positionsmesseinrichtung mit

   - einem zylinderförmigen Objekt (2; 20; 120; 220; 420; 520) mit einer ringartig umlaufenden Reflexions-Messteilung (2.1; 21; 121; 212; 421; 521), das um die Objekt-Längsachse (A) drehbar angeordnet ist und
   - einer gegenüber dem drehbar angeordnetem Objekt (2; 20; 120; 220; 420; 520) stationären Abtasteinheit (1; 10; 110; 410a, 410b, 510) zum optischen Abtasten der Reflexions-Messteilung (2.1; 21; 121; 212; 421; 521) mit einer Lichtquelle (11; 111; 211; 511), einem Sendegitter (13; 113; 213; 513) und einem Detektor (112; 212; 512), wobei die von der Lichtquelle (11; 111; 211; 511) emittierten Strahlenbündel das Sendegitter (13; 113; 213; 513) durchlaufen, dann die Reflexions-Messteilung (2.1; 21; 121; 212; 421; 521) beaufschlagen und von dieser eine Rückreflexion in Richtung des Detektors (112; 212; 512) erfolgt, über den rotationsabhängige Positionssignale erzeugbar sind und
   - dass der optisch-wirksame Normalen-Abstand (v) zwischen dem Detektor (112; 212; 512) und der Reflexions-Messteilung (2.1; 21; 121; 212; 421; 521) in Abhängigkeit vom Radius (R) des zylinderförmigen Objekts (2; 20; 120; 220; 420; 520) größer oder kleiner ist als der optisch-wirksame Normalen-Abstand (u) zwischen dem Sendegitter (13; 113; 213; 513) und der Reflexions-Messteilung (2.1; 21; 121; 212; 421; 521) und
   - dass der Normalen-Abstand ($\epsilon$) zwischen dem Sendegitter (13; 113; 213; 513) und dem Detektor (112; 212; 312; 512)

$$\epsilon = (2 \cdot u^2) / R$$

   zuzüglich einer Toleranz von +/- 20% beträgt,
   mit:

   $\epsilon :=$ Normalen-Abstand zwischen Sendegitter und Detektor
   $u :=$ Optisch-wirksamer Normalen-Abstand des Sendegitters zur Reflexions-Messteilung
   $R :=$ Radius des zylinderförmigen Objekts, wobei R > 0 für eine Außenabtastung und R < 0 für eine Innenabtastung.

2. Positionsmesseinrichtung nach Anspruch 1, wobei mit Ausnahme des Sendegitters (13; 113; 213; 513) keine weiteren optischen Elemente zwischen der Lichtquelle (11; 111; 211; 511) und der Reflexions-Messteilung (2.1; 21;

121; 212; 421; 521) angeordnet sind.

3. Positionsmesseinrichtung nach mindestens einem der vorhergehenden Ansprüche, wobei die Reflexions-Messteilung (2.1; 21; 121; 212; 421; 521) als Gitter mit periodisch angeordneten Teilungsbereichen ausgebildet ist, die unterschiedliche optische Eigenschaften besitzen, wobei die Längserstreckungsrichtung der Teilungsbereiche parallel oder unter 45° zur Objekt-Längsachse (A) orientiert ist.

4. Positionsmesseinrichtung nach Anspruch 3, wobei

- die Reflexions-Messteilung (421) ein weiteres Gitter mit periodisch angeordneten Teilungsbereichen umfasst, die unterschiedliche optische Eigenschaften besitzen, wobei die Längserstreckungsrichtung der Teilungsbereiche senkrecht zur Objekt-Längsachse (A) oder unter 45° zur Objekt-Längsachse (A) orientiert sind und
- eine zweite Abtasteinheit (410b) zum optischen Abtasten des weiteren Gitters vorgesehen ist,
- so dass über die zwei Abtasteinheiten (410a, 41b) die Rotationsbewegung des Objekts (420) um die Objekt-Längsachse (A) als auch die Translationsbewegung des Objekts (420) entlang der Objekt-Längsachse (A) messtechnisch erfassbar ist.

5. Positionsmesseinrichtung nach Anspruch 3 oder 4, wobei die Reflexions-Messteilung (2.1; 21; 121; 212; 421; 521) als Amplitudengitter ausgebildet ist.

6. Positionsmesseinrichtung nach Anspruch 3 oder 4, wobei die Reflexions-Messteilung (2.1; 21; 121; 212; 421; 521) als Phasengitter ausgebildet ist.

7. Positionsmesseinrichtung nach mindestens einem der vorhergehenden Ansprüche, wobei der radiale Abstand der Abtasteinheit (1; 10; 110; 410a, 410b, 510) von der Objekt-Längsachse (A) größer als der Radius (R) des zylinderförmigen Objekts (2; 20; 120; 420; 520) gewählt ist.

8. Positionsmesseinrichtung nach mindestens einem der Ansprüche 1 - 6, wobei der radiale Abstand der Abtasteinheit (210) von der Objekt-Längsachse (A) kleiner als der Radius (R) des zylinderförmigen Objekts (220) gewählt ist.

9. Positionsmesseinrichtung nach mindestens einem der vorhergehenden Ansprüche, wobei die Lichtquelle (11; 111; 211; 511) als räumlich ausgedehnte Lichtquelle ausgebildet ist.

10. Positionsmesseinrichtung nach Anspruch 1, wobei das Sendegitter (13) auf einem transparenten plättchenförmigen Substrat (14) angeordnet ist, das sich ebenfalls im Abtaststrahlengang zwischen dem Sendegitter (13) und der Reflexions-Messteilung (21) sowie zwischen der Reflexions-Messteilung (21) und dem Detektor (12) befindet, wobei sich die physikalischen Normalen-Abstände (u', v') folgendermaßen aus den optisch-wirksamen Normalen-Abständen (u, v) ergeben

$$u' = u + \left(1 - \frac{1}{n_S}\right) t_S$$

$$v' = v + \left(1 - \frac{1}{n_S}\right) t_D$$

mit

u := Optisch-wirksamer Normalen-Abstand des Sendegitters zur Reflexions-Messteilung
u' := Physikalischer Normalen-Abstand des Sendegitters zur Reflexions-Messteilung
v := Optisch-wirksamer Normalen-Abstand der Reflexions-Messteilung zur Detektionsebene D
v' := Physikalischer Normalen-Abstand der Reflexions-Messteilung zur Detektionsebene D
$n_S$ := Brechungsindex des Substrats
$t_S$ := Substratdicke zwischen Sendegitter und Reflexions-Messteilung
$t_D$ := Substratdicke zwischen Reflexions-Messteilung und Detektionsebene

11. Positionsmesseinrichtung nach Anspruch 1, wobei das Sendegitter (113) auf der Seite eines transparenten plättchenförmigen Substrat (114) angeordnet ist, die der Reflexions-Messteilung (121) zugewandt ist, wobei sich der physikalische Normalen-Abstand (v') folgendermaßen aus dem optisch-wirksamen Normalen-Abstand (v) ergibt

$$v^{'} = v + \left(1 - \frac{1}{n_S}\right) t_D$$

mit

v := Optisch-wirksamer Normalen-Abstand der Reflexions-Messteilung zur Detektionsebene D
v' := Physikalischer Normalen-Abstand der Reflexions-Messteilung zur Detektionsebene D
$n_S$ := Brechungsindex des Substrats
$t_D$ := Substratdicke zwischen Reflexions-Messteilung und Detektionsebene

12. Positionsmesseinrichtung nach Anspruch 1, wobei die optisch-wirksame Position des Sendegitters (13; 113; 213; 513) näher an der Objekt-Längsachse (A) liegt als die optisch wirksame Position des Detektors (112; 212; 512), wobei die optisch-wirksame Position des Sendegitters (13; 113; 213; 513) durch den optisch-wirksamen Normalen-Abstand (u) zwischen Sendegitter (13; 113; 213; 513) und Reflexions-Messteilung (2.1; 21; 121; 212; 421; 521) bestimmt ist und die optisch-wirksame Position des Detektors (112; 212; 512) durch den optisch-wirksamen Normalen-Abstand (v) zwischen Detektor (112; 212; 512) und Reflexions-Messteilung (2.1; 21: 121; 212; 421; 521).

13. Positionsmesseinrichtung mit

- einem zylinderförmigen Objekt (320) mit einer ringartig umlaufenden Reflexions-Messteilung (321), das um die Objekt-Längsachse (A) drehbar angeordnet ist und
- einer gegenüber dem drehbar angeordnetem Objekt (320) stationären Abtasteinheit (310) zum optischen Abtasten der Reflexions-Messteilung (321) mit einer Punktlichtquelle (311) und einem Detektor (312), wobei die von der Punktlichtquelle (311) emittierten Strahlenbündel die Reflexions-Messteilung (321) beaufschlagen und von dieser eine Rückreflexion in Richtung des Detektors (312) erfolgt, über den rotationsabhängige Positionssignale erzeugbar sind und
- dass der optisch-wirksame Normalen-Abstand (v) zwischen dem Detektor (312) und der Reflexions-Messteilung (321)

   - im Fall einer Außenabtastung größer ist als der optisch-wirksame Normalen-Abstand (u) zwischen dem Emissionsbereich der Punktlichtquelle (311) und der Reflexions-Messteilung (321) oder
   - im Fall einer Innenabtastung kleiner ist als der der optisch-wirksame Normalen-Abstand (u) zwischen dem Emissionsbereich der Punktlichtquelle (311) und der Reflexions-Messteilung (321) und

- dass der Normalen-Abstand (e) zwischen dem Emissionsbereich der Punktlichtquelle (311) und dem Detektor (112; 212; 312; 512)

$$\varepsilon = (2 \cdot u^2) / R$$

zuzüglich einer Toleranz von +/- 20% beträgt,
mit:

$\varepsilon$ := Normalen-Abstand zwischen Sendegitter und Emissionsbereich der Punktlichtquelle
u := Optisch-wirksamer Normalen-Abstand des Emissionsbereichs der Punktlichtquelle zur Reflexions-Messteilung
R := Radius des zylinderförmigen Objekts, wobei R > 0 für eine Außenabtastung und R < 0 für eine Innenabtastung.

**Claims**

1. Position measurement device, comprising

    - a cylindrical object (2; 20; 120; 220; 420; 520) having an annularly circumferential reflection measurement graduation (2.1; 21; 121; 212; 421; 521), which is arranged rotatably about the object longitudinal axis (A), and
    - a scanning unit (1; 10; 110; 410a, 410b, 510), which is stationary with respect to the rotatably arranged object (2; 20; 120; 220; 420; 520), for optically scanning the reflection measurement graduation (2.1; 21; 121; 212; 421; 521) having a light source (11; 111; 211; 511), a transmission grating (13; 113; 213; 513) and a detector (112; 212; 512), wherein the beams emitted by the light source (11; 111; '211; 511) pass through the transmission grating (13; 113; 213; 513), are then incident on the reflection measurement graduation (2.1; 21; 121; 212; 421; 521), and from here a back reflection in the direction of the detector (112; 212; 512) takes place, by way of which rotation-dependent position signals are able to be generated, and
    - that the optically effective normal distance (v) between the detector (112; 212; 512) and the reflection measurement graduation (2.1; 21; 121; 212; 421; 521), in dependence on the radius (R) of the cylindrical object (2; 20; 120; 220; 420; 520) is greater than or smaller than the optically effective normal distance (u) between the transmission grating (13; 113; 213; 513) and the reflection measurement graduation (2.1; 21; 121; 212; 421; 521), and
    - that the normal distance ($\varepsilon$) between the transmission grating (13; 113; 213; 513) and the detector (112; 212; 312; 512) is

$$\varepsilon = (2 \bullet u^2)/R$$

    plus a tolerance of +/- 20%,
    with:

    $\varepsilon$ := normal distance between transmission grating and detector
    u := optically effective normal distance of the transmission grating from the reflection measurement graduation
    R := radius of the cylindrical object, wherein R > 0 for an external scan and R < 0 for an internal scan.

2. Position measurement device according to Claim 1, wherein, with the exception of the transmission grating (13; 113; 213; 513), no further optical elements are arranged between the light source (11; 111; 211; 511) and the reflection measurement graduation (2.1; 21; 121; 212; 421; 521).

3. Position measurement device according to at least one of the preceding claims, wherein the reflection measurement graduation (2.1; 21; 121; 212; 421; 521) is configured as a grating having periodically arranged graduation regions with different optical properties, wherein the direction of longitudinal extent of the graduation regions is oriented parallel or at 45° with respect to the object longitudinal axis (A).

4. Position measurement device according to Claim 3, wherein

    - the reflection measurement graduation (421) comprises a further grating having periodically arranged graduation regions with different optical properties, wherein the direction of longitudinal extent of the graduation regions are oriented perpendicular to the object longitudinal axis (A) or at 45° with respect to the object longitudinal axis (A), and
    - a second scanning unit (410b) is provided for optically scanning the further grating,
    - such that the rotational movement of the object (420) about the object longitudinal axis (A) and also the translational movement of the object (420) along the object longitudinal axis (A) are metrologically capturable by way of the two scanning units (410a, 41b).

5. Position measurement device according to Claim 3 or 4, wherein the reflection measurement graduation (2.1; 21; 121; 212; 421; 521) is configured as an amplitude grating.

6. Position measurement device according to Claim 3 or 4, wherein the reflection measurement graduation (2.1; 21; 121; 212; 421; 521) is configured as a phase grating.

7. Position measurement device according to at least one of the preceding claims, wherein the radial distance of the scanning unit (1; 10; 110; 410a, 410b, 510) from the object longitudinal axis (A) is selected to be greater than the radius (R) of the cylindrical object (2; 20; 120; 420; 520).

8. Position measurement device according to at least one of Claims 1-6, wherein the radial distance of the scanning unit (210) from the object longitudinal axis (A) is selected to be smaller than the radius (R) of the cylindrical object (220).

9. Position measurement device according to at least one of the preceding claims, wherein the light source (11; 111; 211; 511) is configured as a spatially extending light source.

10. Position measurement device according to Claim 1, wherein the transmission grating (13) is arranged on a transparent plate-type substrate (14) that is likewise located in the scanning beam path between the transmission grating (13) and the reflection measurement graduation (21) and also between the reflection measurement graduation (21) and the detector (12), wherein the physical normal distances (u', v') are obtained as follows from the optically effective normal distances (u, v)

$$u' = u + \left(1 - \frac{1}{n_S}\right) t_S$$

$$v' = v + \left(1 - \frac{1}{n_S}\right) t_D$$

with

    u := optically effective normal distance of the transmission grating from the reflection measurement graduation
    u' := physical normal distance of the transmission grating from the reflection measurement graduation
    v := optically effective normal distance of the reflection measurement graduation from the detection plane D
    v' physical normal distance of the reflection measurement graduation from the detection plane D $n_S$ := refractive index of the substrate
    $t_S$ := substrate thickness between transmission grating and reflection measurement graduation
    $t_D$ := substrate thickness between reflection measurement graduation and detection plane.

11. Position measurement device according to Claim 1, wherein the transmission grating (113) is arranged on that side of a transparent plate-type substrate (114) which faces the reflection measurement graduation (121), wherein the physical normal distance (v') is obtained as follows from the optically effective normal distance (v)

$$v' = v + \left(1 - \frac{1}{n_S}\right) t_D$$

with

    v := optically effective normal distance of the reflection measurement graduation from the detection plane D
    v' := physical normal distance of the reflection measurement graduation from the detection plane D
    $n_S$ := refractive index of the substrate
    $t_D$ := substrate thickness between reflection measurement graduation and detection plane.

12. Position measurement device according to Claim 1, wherein the optically effective position of the transmission grating (13; 113; 213; 513) is closer to the object longitudinal axis (A) than the optically effective position of the detector (112; 212; 512), wherein the optically effective position of the transmission grating (13; 113; 213; 513) is determined by the optically effective normal distance (u) between transmission grating (13; 113; 213; 513) and reflection measurement graduation (2.1; 21; 121; 212; 421; 521) and the optically effective position of the detector (112; 212; 512) is determined by the optically effective normal distance (v) between detector (112; 212; 512) and reflection measurement graduation (2.1; 21; 121; 212; 421; 521).

13. Position measurement device, comprising

- a cylindrical object (320) having an annularly circumferential reflection measurement graduation (321), which is arranged rotatably about the object longitudinal axis (A), and

- a scanning unit (310), which is stationary with respect to the rotatably arranged object (320), for optically scanning the reflection measurement graduation (321) having a point light source (311) and a detector (312), wherein the beams emitted by the point light source (311) are incident on the reflection measurement graduation (321), and from here a back reflection in the direction of the detector (312) takes place, by way of which rotation-dependent position signals are able to be generated, and

- that the optically effective normal distance (v) between the detector (312) and the reflection measurement graduation (321),

- in the case of an external scan, is greater than the optically effective normal distance (u) between the emission region of the point light source (311) and the reflection measurement graduation (321), or,
- in the case of an internal scan, is smaller than the optically effective normal distance (u) between the emission region of the point light source (311) and the reflection measurement graduation (321), and

- that the normal distance ($\varepsilon$) between the emission region of the point light source (311) and the detector (112; 212; 312; 512) is

$$\varepsilon = (2 \bullet u^2) / R$$

plus a tolerance of +/- 20%,
with:

$\varepsilon$ := normal distance between transmission grating and emission region of the point light source
u := optically effective normal distance of the emission region of the point light source from the reflection measurement graduation
R := radius of the cylindrical object, wherein R > 0 for an external scan and R < 0 for an internal scan.

**Revendications**

1. Dispositif de mesure de position comprenant

- un objet de forme cylindrique (2 ; 20 ; 120 ; 220 ; 420 ; 520) pourvu d'une graduation de mesure par réflexion (2.1 ; 21 ; 121 ; 212 ; 421 ; 521) circonférentielle en forme d'anneau qui est montée rotative autour de l'axe longitudinal (A) de l'objet et

- une unité de palpage (1 ; 10 ; 110 ; 410a ; 410b ; 510) fixe par rapport à l'objet (2 ; 20 ; 120 ; 220 ; 420 ; 520) monté rotatif, destinée au palpage optique de la graduation de mesure par réflexion (2.1 ; 21 ; 121 ; 212 ; 421 ; 521) avec une source de lumière (11 ; 113 ; 211 ; 511), une grille d'émission (13 ; 113 ; 213 ; 513) et un détecteur (112 ; 212 ; 512), les faisceaux de rayons émis par la source de lumière (11 ; 121 ; 211 ; 511) traversant la grille d'émission (13 ; 113 ; 213 ; 513), puis étant appliqués sur la graduation de mesure par réflexion (2.1 ; 21 ; 121 ; 212 ; 421 ; 521) et une rétroréflexion en direction du détecteur (112 ; 212 ; 512) se produisant depuis celle-ci, par le biais de laquelle peuvent être générés des signaux de position dépendants de la position et

- l'écart normal (v) optiquement actif entre le détecteur (112 ; 212 ; 512) et la graduation de mesure par réflexion (2.1 ; 21 ; 121 ; 212 ; 421 ; 521) en fonction du rayon (R) de l'objet de forme cylindrique (2 ; 20 ; 120 ; 220 ; 420 ; 520) étant plus grand ou plus petit que l'écart normal (u) optiquement actif entre la grille d'émission (13 ; 113 ; 213 ; 513) et la graduation de mesure par réflexion (2.1 ; 21 ; 121 ; 212 ; 421 ; 521) et

- l'écart normal ($\varepsilon$) entre la grille d'émission (13 ; 113 ; 213 ; 513) et le détecteur (112 ; 212 ; 312 ; 512) étant de

$$\varepsilon = (2 \cdot u^2) / R$$

plus une tolérance de $\pm$20 %,
avec :

$\varepsilon$ = écart normal entre la grille d'émission et le détecteur

EP 2 738 524 B1

u = écart normal optiquement actif entre la grille d'émission et la graduation de mesure par réflexion

R = rayon de l'objet de forme cylindrique, avec R > 0 pour un palpage extérieur et R < 0 pour un palpage intérieur.

**2.** Dispositif de mesure de position selon la revendication 1, aucun élément optique supplémentaire, à l'exception de la grille d'émission (13 ; 113 ; 213 ; 513), n'étant disposé entre la source de lumière (11 ; 111 ; 211 ; 511) et la graduation de mesure par réflexion (2.1 ; 21 ; 121 ; 212 ; 421 ; 521).

**3.** Dispositif de mesure de position selon au moins l'une des revendications précédentes, la graduation de mesure par réflexion (2.1 ; 21 ; 121 ; 212 ; 421 ; 521) étant réalisée sous la forme d'une grille avec des zones de graduation disposées périodiquement qui possèdent des propriétés optiques différentes, le sens de la projection longitudinale des zones de graduation étant orienté parallèlement ou sous un angle de 45° par rapport à l'axe longitudinal (A) de l'objet.

**4.** Dispositif de mesure de position selon la revendication 3,

- la graduation de mesure par réflexion (421) comportant une grille supplémentaire avec des zones de graduation disposées périodiquement qui possèdent des propriétés optiques différentes, le sens de la projection longitudinale des zones de graduation étant orienté perpendiculairement à l'axe longitudinal (A) de l'objet ou sous un angle de 45° par rapport à l'axe longitudinal (A) de l'objet et
- une deuxième unité de palpage (410b) étant présente pour le palpage optique de la grille supplémentaire,
- de sorte que le mouvement de rotation de l'objet (420) autour de l'axe longitudinal (A) de l'objet ainsi que le mouvement de translation de l'objet (420) le long de l'axe longitudinal (A) de l'objet peuvent être détectés par métrologie par le biais des deux unités de palpage (410a, 410b).

**5.** Dispositif de mesure de position selon la revendication 3 ou 4, la graduation de mesure par réflexion (2.1 ; 21 ; 121 ; 212 ; 421 ; 521) étant réalisée sous la forme d'un réseau d'amplitude.

**6.** Dispositif de mesure de position selon la revendication 3 ou 4, la graduation de mesure par réflexion (2.1 ; 21 ; 121 ; 212 ; 421 ; 521) étant réalisée sous la forme d'un réseau de phase.

**7.** Dispositif de mesure de position selon au moins l'une des revendications précédentes, l'écart radial entre l'unité de palpage (1 ; 10 ; 110 ; 410a ; 410b ; 510) et l'axe longitudinal (A) de l'objet étant choisi supérieur au rayon (R) de l'objet de forme cylindrique (2 ; 20 ; 120 ; 220 ; 420 ; 520).

**8.** Dispositif de mesure de position selon au moins l'une des revendications 1 à 6, l'écart radial entre l'unité de palpage (210) et l'axe longitudinal (A) de l'objet étant choisi inférieur au rayon (R) de l'objet de forme cylindrique (220).

**9.** Dispositif de mesure de position selon au moins l'une des revendications précédentes, la source de lumière (11 ; 111 ; 211 ; 511) étant réalisée sous la forme d'une source de lumière étendue dans l'espace.

**10.** Dispositif de mesure de position selon la revendication 1, la grille d'émission (13) étant disposée sur un substrat (14) transparent en forme de plaquette qui se trouve également dans le trajet du rayon de palpage entre la grille d'émission (13) et la graduation de mesure par réflexion (21) ainsi qu'entre la graduation de mesure par réflexion (21) et le détecteur (12), les écarts normaux (u', v') physiques résultant comme suit des écarts normaux (u, v) optiquement actifs

$$u' = u + \left(1 - \frac{1}{n_S}\right) t_S$$

$$v' = v + \left(1 - \frac{1}{n_S}\right) t_D$$

avec

u = écart normal optiquement actif entre la grille d'émission et la graduation de mesure par réflexion

u' = écart normal physique entre la grille d'émission et la graduation de mesure par réflexion

v = écart normal optiquement actif entre la graduation de mesure par réflexion et le plan de détection D

v' = écart normal physique entre la graduation de mesure par réflexion et le plan de détection D

$n_S$ = indice de réfraction du substrat

$t_S$ = épaisseur du substrat entre la grille d'émission et la graduation de mesure par réflexion

$t_D$ = épaisseur du substrat entre la graduation de mesure par réflexion et le plan de détection.

**11.** Dispositif de mesure de position selon la revendication 1, la grille d'émission (13) étant disposée sur côté d'un substrat (114) transparent en forme de plaquette qui fait face à la graduation de mesure par réflexion (121), l'écart normal (v') physique résultant comme suit de l'écart normal (v) optiquement actif

$$v' = v + \left(1 - \frac{1}{n_S}\right)t_D$$

avec

v = écart normal optiquement actif entre la graduation de mesure par réflexion et le plan de détection D

v' = écart normal physique entre la graduation de mesure par réflexion et le plan de détection D

$n_S$ = indice de réfraction du substrat

$t_D$ = épaisseur du substrat entre la graduation de mesure par réflexion et le plan de détection.

**12.** Dispositif de mesure de position selon la revendication 1, la position optiquement active de la grille d'émission (13 ; 113 ; 213 ; 513) se trouvant plus proche de l'axe longitudinal (A) de l'objet que la position optiquement active du détecteur (112 ; 212 ; 512), la position optiquement active de la grille d'émission (13 ; 113 ; 213 ; 513) étant définie par l'écart normal (u) optiquement actif entre la grille d'émission (13 ; 113 ; 213 ; 513) et la graduation de mesure par réflexion (2.1 ; 21 ; 121 ; 212 ; 421 ; 521) et la position optiquement active du détecteur (112 ; 212 ; 512) par l'écart normal (v) optiquement actif entre le détecteur (112 ; 212 ; 512) et la graduation de mesure par réflexion (2.1 ; 21 ; 121 ; 212 ; 421 ; 521).

**13.** Dispositif de mesure de position comprenant

- un objet de forme cylindrique (320) pourvu d'une graduation de mesure par réflexion (321) circonférentielle en forme d'anneau qui est montée rotative autour de l'axe longitudinal (A) de l'objet et

- une unité de palpage (310) fixe par rapport à l'objet (320) monté rotatif, destinée au palpage optique de la graduation de mesure par réflexion (321) avec une source de lumière ponctuelle (311) et un détecteur (312), les faisceaux de rayons émis par la source de lumière ponctuelle (311) étant appliqués sur la graduation de mesure par réflexion (321) et une rétroréflexion en direction du détecteur (312) se produisant depuis celle-ci, par le biais de laquelle peuvent être générés des signaux de position dépendants de la position et

- l'écart normal (v) optiquement actif entre le détecteur (312) et la graduation de mesure par réflexion (321)

- dans le cas d'un palpage extérieur, étant plus grand que l'écart normal (u) optiquement actif entre la zone d'émission de la source de lumière ponctuelle (311) et la graduation de mesure par réflexion (321) ou

- dans le cas d'un palpage intérieur, étant plus petit que l'écart normal (u) optiquement actif entre la zone d'émission de la source de lumière ponctuelle (311) et la graduation de mesure par réflexion (321) et

- l'écart normal ($\varepsilon$) entre la zone d'émission de la source de lumière ponctuelle (311) et le détecteur (112 ; 212 ; 312 ; 512) étant de

$$\varepsilon = (2 \cdot u^2) / R$$

plus une tolérance de $\pm20$ %,

avec :

$\varepsilon$ = écart normal entre la grille d'émission et la zone d'émission de la source de lumière ponctuelle

u = écart normal optiquement actif entre la zone d'émission de la source de lumière ponctuelle et la graduation de mesure par réflexion

R = rayon de l'objet de forme cylindrique, avec R > 0 pour un palpage extérieur et R < 0 pour un palpage intérieur.

Fig. 1a

Fig. 1b

Fig. 2

EP 2 738 524 B1

Fig. 3

23

Fig. 4

Fig. 5

Fig. 6

Fig. 7

EP 2 738 524 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1795872 A1
- US 2007187581 A1
- WO 2007129022 A1

- EP 2570780 A2
- EP 1760435 A2

**In der Beschreibung aufgeführte Nicht-Patentliteratur**

- Analysis of Grating Images and its Application to Displacement Metrology. **R.M. PETTIGREW.** 1st European Congress on Optics Applied to Metrology. SPIE, 1977, vol. 136, 325-332